Europäisches Patentamt

European Patent Office

Office européen des brevets

(11) Publication number: **0 153 525**
A1

# (12) EUROPEAN PATENT APPLICATION

(21) Application number: 84304407.4

(22) Date of filing: 28.06.84

(51) Int. Cl.⁴: **B 01 D 8/00**
B 01 J 19/00, F 25 J 3/08

(30) Priority: 17.02.84 US 581101

(43) Date of publication of application:
04.09.85 Bulletin 85/36

(84) Designated Contracting States:
AT BE CH DE FR GB IT LI LU NL SE

(71) Applicant: STAUFFER CHEMICAL COMPANY

Westport Connecticut 06881(US)

(72) Inventor: Baumann, John Andrew
112 Pine Avenue
Ossining, N.Y. 10562(US)

(72) Inventor: Parry, Robert Walter
5002 Fairbrook Lane
Salt Lake City Utah 84117(US)

(72) Inventor: Schachter, Rozalie
75-14 173rd Street
Flushing, N.Y. 11366(US)

(74) Representative: Smith, Sydney et al,
Elkington and Fife High Holborn House 52/54 High
Holborn
London WC1V 6SH(GB)

(54) Pnictide trap for vacuum systems.

(57) A vacuum system trap characterised in that it comprises:
(A) cracking means; and
(B) cold walls adjacent thereto is disclosed.
A process for the removal of deleterious gas(es) from a
vacuum chamber or line characterised in that it comprises
cracking the gas(es) to a form having a higher sticking
coefficient and condensing such gas(es) on a cold surface
using such a trap is also disclosed.
Referring to the accompanying illustrative diagram, the
present trap may comprise cracking means heated filament
22 and cold walls 26.
The present invention represents an advance over the
prior art.

./...

FIG. 2

## PNICTIDE TRAP FOR VACUUM SYSTEMS

This invention relates to a pnictide trap for vacuum systems; more particularly, it relates to such traps and also to pnictide crackers.

Phosphorus and other pnictides produce deleterious effects when passed through the forepumps of vacuum systems. They also collect on the walls and mechanisms in vacuum chambers and mechanisms periodically have to be disassembled for cleaning. Re-evaporation of pnictides also increases the background pressure of $Pnictide_4$ species which is undesirable in certain processes. An effective trapping system is needed.

For further information, reference may be made to, for example, GB-A-2,113,663 and to the related applications filed herewith, in particular those based on USSN 581,139, USSN 509,157, USSN 509,175, USSN 581,115, USSN 509,158, USSN 581,104, USSN 581,105, USSN 581,103 and USSN 581,102.

It is an object of the present invention to provide a vacuum system trap.

Another object of the present invention is to provide such a trap for pnictides.

The present invention provides a vacuum system trap characterised in that it comprises:

    (A) cracking means; and

    (B) cold walls adjacent thereto.

It is prefered that the cold walls be removable from the vacuum system. The trap is generally used as a fore-line trap located before the fore-pump in a vacuum system. It may be located in a vacuum chamber or in a vacuum line.

More particularly, the present trap may comprise:

    (A) a body portion;

    (B) cooling means in contact with the said body portion;

(C) a removable sleeve fitting into the said body portion; and

(D) cracking means within the said sleeve.

Preferably, it also comprises:

(E) an inlet to the said trap directed in a first direction; and

(F) an outlet from the said trap directed in a second direction, generally orthogonal to the said first direction.

The trap inlet is preferably directed toward the cracking means, which is preferably a heated filament.

The present invention also provides a process for the removal of deleterious gas(es) from a vacuum chamber or line characterised in that it comprises cracking the gas(es) to a form having a higher sticking coefficient and condensing such gas(es) on a cold surface using such a trap.

Preferably, the gas(es) comprise(s) a pnictide, more particularly a Pnictide$_4$ species, which is cracked to Pnictide$_2$.

For a fuller understanding of the present invention, reference should be made to the following detailed description taken in connection with the accompanying drawings in which:

Figure 1 is a diagram of a vacuum system employing a pnictide trap according to the present invention;

Figure 2 is a cross-sectional view of the pnictide trap of the vacuum system of Figure 1; and

Figure 3 is a partial cross-sectional view of the removable and replaceable portion of the pnictide trap of Figure 2.

The same reference characters refer to the same elements throughout the several views of the drawings.

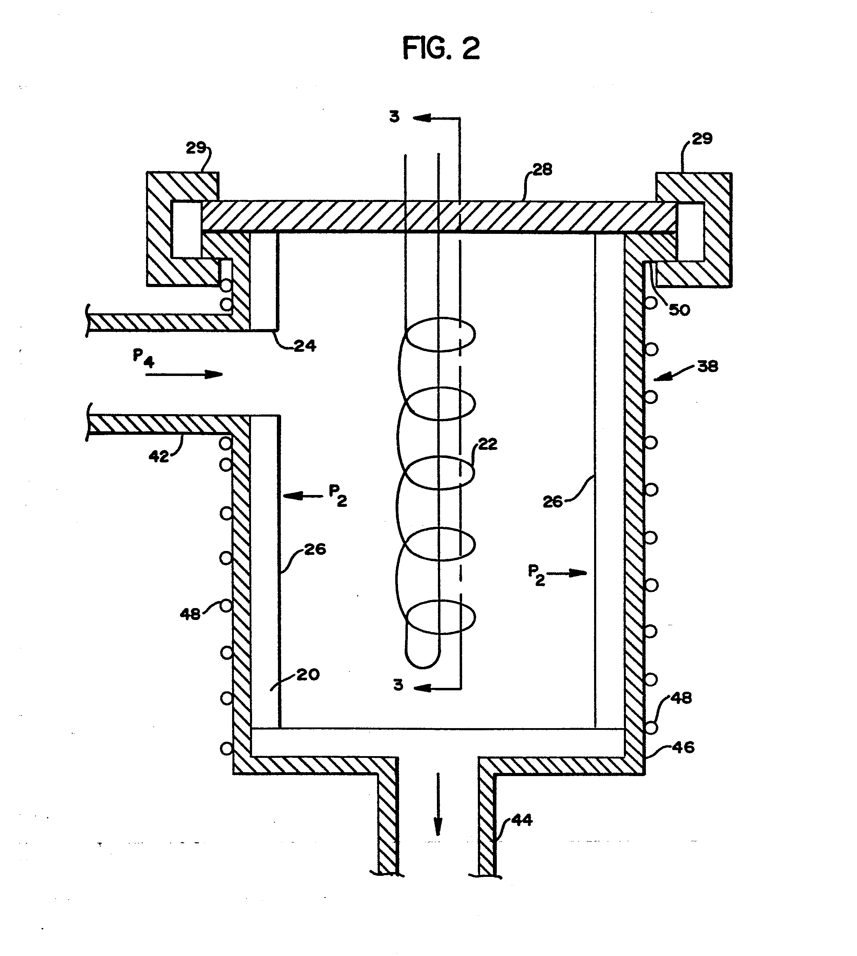

In general terms, a pnictide trap 38 according to the present invention comprises a chilled cylindrical sleeve 20 (Figure 2) and a heated filament 22 or a plasma, (such as that provided by a glow discharge) centrally located within the sleeve 20. $P_4$ species enters the sleeve 20 through opening 24 therein. $P_4$ is cracked to $P_2$ by the heated filament 22 which is preferably heated to above 1000°C. $P_2$ which has a high sticking coefficient is converted to a phosphorus film on the inner wall 26 of the sleeve 20.

The sleeve 20 may be removed from the system by removing clamps 29. First, the cover plate 28 and filament 22 are removed and then the sleeve 20. It may be cleaned or replace by a new clean sleeve.

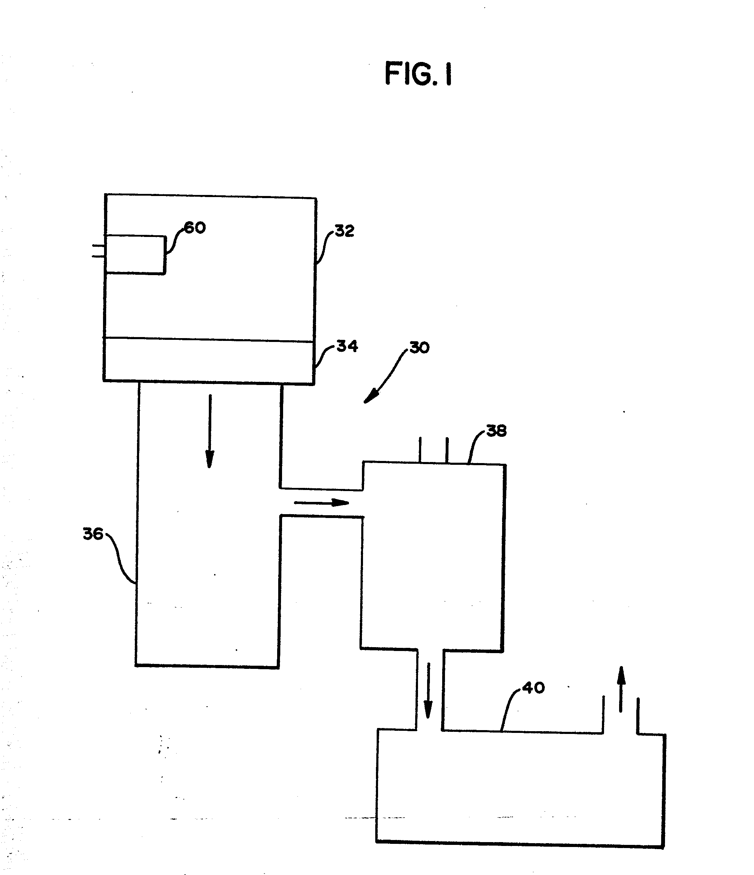

The pnictide trap 38 is shown in a vacuum line in Figure 1. Another one 60 may also be located in the vacuum chamber 32 to reduce extraneous pnictide deposits therein.

In more detail, referring to accompanying Figure 1, a vacuum system 30, according to the present invention, comprises a vacuum chamber 32 and a high vacuum valve 34, diffusion pump 36, pnictide trap 38 and a mechanical forepump 40. Gases are exhausted from the vacuum system in the direction of the arrows.

Now, referring to the accompanying Figure 2, the present pnictide trap is connected between outlet pipe 42 from the diffusion pump 36 (Figure 1) and to the supply pipe 44 to the mechanical forepump 40 (Figure 1).

The pnictide trap 38 comprises a cylindrical body 46 of stainless steel, for example, cooled by water cooling lines 48 in intimate contact therewith.

Cylindrical body 46 is provided with an annular collar 50 surrounding an opening at the top. A removable cylindrical sleeve 20 fits in this opening. Sleeve 20 fits in heat-conductive contact with body 46, so that it is cooled by the water cooling lines 48.

The sleeve 20 is provided with an opening 24 to the pipe 42 through which $P_4$ species enter into the trap 38. A heated filament 22 is mounted to the cover plate 28 by means of an appropriate feed throughs (not shown).

The filament is preferably heated to above 1000°C to cause cracking of a significant portion of the $P_4$ species to $P_2$ which then sticks to the inner wall 26 of the sleeve 20 in the form of a phosphorus film.

For more information concerning the operation of the cracker 22, reference may be made to the above-mentioned related applications, in particular that based on USSN 581,139.

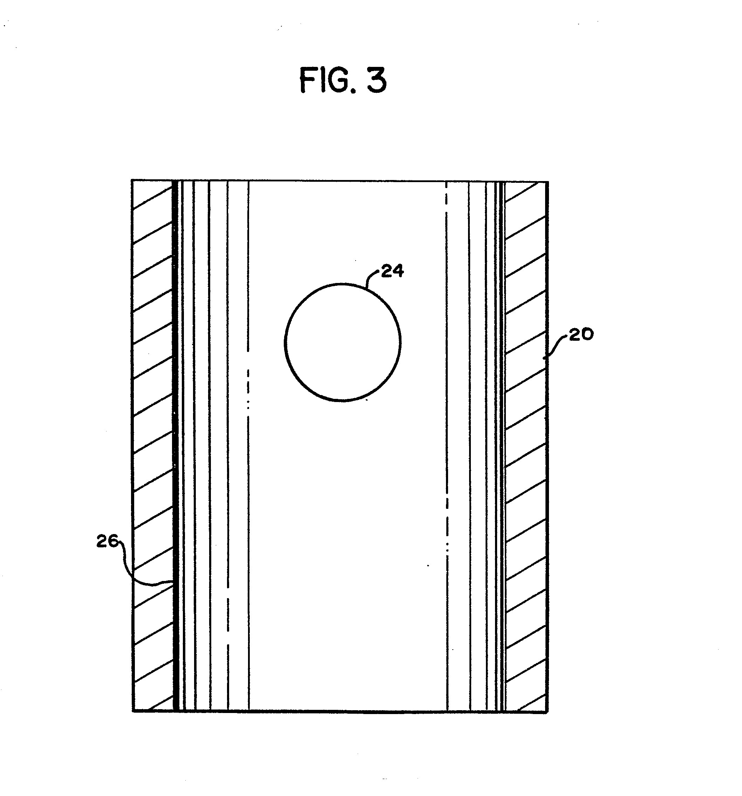

As shown in accompanying Figure 2, the coverplate 28 may be removed together with the filament 22 by removing the clamps 29. The cylindrical sleeve 20 (accompanying Figure 3) may then be removed and replaced, after cleaning or by a new sleeve.

The trap comprising the sleeve 20 and the filament 22 may be placed in the vacuum chamber 32 as at 60 to trap pnictides therein. This will reduce the build-up of pnictide coating inside the chamber 32 and lengthen its usage time between cleanings and reduce the background $Pnictide_4$ pressure when required.

The present invention is useful for pnictides whose $Pnictide_4$ species has a low sticking coefficient and whose cracked species, such as $Pnictide_2$, have a high sticking coefficient. The present invention may be also applied to other gases in vacuum systems which have a low sticking coeffficient until cracked.

It is particularly important to trap pnictides before they get into the forepump as they are very deleterious to its operation.

Any suitable cracker or cracking method may be employed, such as a plasma which may be provided by a glow discharge. The input pipe 42 directs the uncracked species to the cracker 22. Having the exit pipe 44 orthogonal to inlet pipe 42 ensures that more of the cracked species is directed to the walls and that most of the uncracked species encounter the cracker before it may exit through pipe 44.

0153525

Claims:

1.      A vacuum system trap characterised in that it comprises:

        (A)   cracking means (22); and

        (B)   cold walls (26) adjacent thereto.

2.      A trap as claimed in claim 1 wherein the said cold walls are removable from the said vacuum system.

3.      A trap as claimed in claim 1 or claim 2 characterised in that it comprises:

        (A)   a body portion (46);

        (B)   cooling means (48) in contact with the said body portion;

        (C)   a removable sleeve (20) fitting into the said body portion; and

        (D)   cracking means (22) within the said sleeve.

4.      A trap as claimed in any of claims 1 to 3 characterised in that it comprises:

        (E)   an inlet (24) to the said trap directed in a first direction; and

        (F)   an outlet (44) from the said trap directed in a second direction, generally orthogonal to the said first direction.

5.      A trap as claimed in any of claims 1 to 4 wherein the trap inlet is directed toward the said cracking means.

6.      A trap as claimed in any of claims 1 to 5 wherein the said cracking means comprises a heated filament.

7.      A trap as claimed in any of claims 1 to 6 wherein it is located in a vacuum chamber or in a vacuum line.

8.      A process for the removal of deleterious gas(es) from a vacuum chamber or line characterised in that it comprises cracking the gas(es) to a form having a higher sticking coefficient and condensing such gas(es) on a cold surface.

9.     A process as claimed in claim 8 wherein the gas(es) comprise(s) a pnictide.

10.     A process as claimed in claim 8 or claim 9 wherein the gas(es) comprise(s) a $Pnictide_4$ species which is/are cracked to $Pnictide_2$.

# FIG. I

FIG. 2

# FIG. 3

## European Patent Office

## EUROPEAN SEARCH REPORT

, Application number

| DOCUMENTS CONSIDERED TO BE RELEVANT | EP 84304407.4 |
| --- | --- |

| Category | Citation of document with indication, where appropriate, of relevant passages | Relevant to claim | CLASSIFICATION OF THE APPLICATION (Int. Cl.4) |
| --- | --- | --- | --- |
| A | GB - A - 1 075 594 (SIEMENS-SCHUCKERTWERKE) <br> * Page 3, lines 33-104; fig.; claims 26-51 * <br> -- | 1 | B 01 D 8/00 <br> B 01 J 19/00 <br> F 25 J 3/08 |
| A | US - A - 3 382 585 (BLAKE, PEL-MULDER, THUSE) <br> * Claims 1-3; fig. 1-3,5-9 * <br> ---- | 1 | |

| | TECHNICAL FIELDS SEARCHED (Int. Cl.4) |
| --- | --- |
| | B 01 D <br> B 01 J <br> F 25 J <br> F 26 B |

The present search report has been drawn up for all claims

| Place of search | Date of completion of the search | Examiner |
| --- | --- | --- |
| VIENNA | 17-04-1985 | PILLERSTORFF |